# EUROPÄISCHE PATENTSCHRIFT

(11) **EP 0 914 998 B1**
(45) Veröffentlichungstag und Bekanntmachung des Hinweises auf die Patenterteilung: **18.06.2003**
(21) Anmeldenummer: 98117513.6
(22) Anmeldetag: 15.09.1998
(51) Int. Cl.: B60T 8/32

(54) **Verfahren zur Abstimmung von Bremskräften zwischen jeweils zwei miteinander verbundenen Teilen einer Fahrzeugeinheit**
Method for synchronising the brake forces between two parts of a vehicle unit
Méthode de mise en accord des forces de freinage de deux parties reliées formant un véhicule

(30) Priorität: 06.11.1997 DE 19749015
(43) Veröffentlichungstag der Anmeldung: 12.05.1999
(73) Patentinhaber: WABCO GmbH & Co. OHG, 30453 Hannover (DE)
(72) Erfinder: Stender, Axel, 31787 Hameln (DE)
(74) Vertreter: Schrödter, Manfred, Dipl.-Ing.

(56) Entgegenhaltungen:
- EP-A- 0 357 983
- EP-B- 0 532 863
- DE-A- 2 212 618
- DE-A- 4 438 222
- US-A- 4 505 520
- US-A- 4 943 123

## Beschreibung

Die Erfindung betrifft ein Verfahren zur Abstimmung von Bremskräften zwischen jeweils zwei miteinander verbundenen Teilen einer Fahrzeugeinheit gemäß dem Patentanspruch 1.

Ein derartiges Verfahren ist aus der EP 0 532 863 B1 bekannt.

Das bekannte Verfahren ist vorgesehen für eine Fahrzeugeinheit, die aus einem Zugfahrzeug und einem Anhängefahrzeug besteht. Zugfahrzeug und Anhängefahrzeug bilden dabei zwei Teile der Fahrzeugeinheit, die jeweils getrennt voneinander mit Bremskräften beaufschlagbar sind. Bei dem bekannten Verfahren wird eine Abstimmung der Bremskräfte zwischen dem Zugfahrzeug und dem Anhängefahrzeug mit dem Ziel einer gleichmäßigen Bremskraftaufteilung durch eine adaptive Beeinflussung des die Bremskraft im Anhängefahrzeug hervorrufenden Anhängerbremsdruckes vorgenommen, wobei die adaptive Beeinflussung von dem Zugfahrzeug aus gesteuert wird.

Für die Steuerung des Anhängerbremsdruckes werden im Zugfahrzeug Geschwindigkeitssignale ausgewertet, die aufgrund von schlupfbehafteten Raddrehzahlsignalen von an den beiden Teilen der Fahrzeugeinheit angeordneten Rädern ermittelt und als resultierendes Geschwindigkeitssignal für jeweils einen Teil der Fahrzeugeinheit einer zentralen Auswertung, die in dem Zugfahrzeug stattfindet, zugeführt werden.

Zur adaptiven Beeinflussung des Anhängerbremsdruckes aufgrund dieser Geschwindigkeitssignale wird eine physikalische Gesetzmäßigkeit ausgenutzt, gemäß der aus einem Unterschied zwischen schlupfbehafteten Raddrehzahlsignalen auf unterschiedliche Bremskräfte an den schlupfenden Rädern geschlossen werden kann. Beim bekannten Verfahren wird daher beim Auftreten einer Differenz zwischen den Raddrehzahlsignalen bzw. den daraus berechneten Geschwindigkeitssignalen von Zugfahrzeug und Anhängefahrzeug der Bremsdruck des Anhängefahrzeugs derart beeinflußt, daß die Differenz der Raddrehzahlsignale minimiert wird und hierdurch die Bremskräfte zwischen Zugfahrzeug und Anhängefahrzeug annähernd gleichmäßig aufgeteilt werden.

Für die Ausführung des zuvor beschriebenen Verfahrens ist es notwendig, daß derjenigen Einrichtung, die z. B. als elektronisches Steuergerät ausgebildet sein kann und die zentral die Auswertung der Geschwindigkeitssignale und die adaptive Beeinflussung des Anhängerbremsdruckes zwecks Abstimmung der Bremskräfte ausführt, wenigstens ein Geschwindigkeitssignal von jedem Teil der Fahrzeugeinheit, d. h. vom Zugfahrzeug und vom Anhängefahrzeug, zugeführt wird.

Da die Fahrzeugeinheit unter Umständen relativ groß sein kann, kann ein nennenswerter zeitlicher Versatz zwischen den Geschwindigkeitssignalen auftreten, der z. B. durch Signallaufzeiten bei der Übertragung der Signale vom Anhängefahrzeug zum Zugfahrzeug oder auch durch unterschiedliche Filterungsverfahren der Raddrehzahlsignale in den Teilen der Fahrzeugeinheit verursacht werden kann.

Bei dem bekannten Verfahren können derartige Signalunterschiede zu einer unzureichenden Abstimmung der Bremskräfte zwischen Zugfahrzeug und Anhängefahrzeug und somit zu unterschiedlicher Bremsbelagabnutzung, zu einem verlängerten Bremsweg und unter Umständen sogar zu einem gefährlichem Fahrzustand führen.

Aus der US 4,505,520 ist eine Einrichtung zur Verhinderung des Blockierens von Rädern eines Fahrzeuges bekannt. Im Rahmen der Verhinderung des Blockierens von Rädern sorgt die dortige Einrichtung für eine Erhöhung des Bremsdrucks an der Hinteraches des Fahrzeuges, wenn festgestellt wird, daß die Verzögerung der Räder der Vorderachse des Fahrzeuges größer ist als die Verzögerung der Räder der Hinterachse dieses Fahrzeuges.

Der Erfindung liegt daher die Aufgabe zugrunde, ein Verfahren zur Abstimmung von Bremskräften zwischen jeweils zwei miteinander verbundenen Teilen einer Fahrzeugeinheit anzugeben, bei dem eine möglichst genaue Abstimmung der Bremskräfte auch bei Verwendung von unterschiedlich gearteten Geschwindigkeitssignalen ermöglicht wird.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung kann sowohl für die Abstimmung von Bremskräften zwischen einem Zugfahrzeug und einem Anhängefahrzeug als auch für die Abstimmung der Bremskräfte innerhalb des Zugfahrzeuges und/oder des Anhängefahrzeuges verwendet werden. Je nach Anwendung der Erfindung werden als Teile der Fahrzeugeinheit somit Zugfahrzeug/Anhängefahrzeug oder die jeweiligen Achsgruppen des Zugfahrzeugs und/oder des Anhängefahrzeuges betrachtet. Auch eine mehrfache Anwendung der Erfindung innerhalb der Fahrzeugeinheit ist daher vorteilhaft.

Die Erfindung hat den Vorteil, daß beliebige Fahrzeugteile zu einer Fahrzeugeinheit miteinander verkoppelbar sind, insbesondere auch Fahrzeugteile von unterschiedlichen Herstellern und mit unterschiedlich gearteten Komponenten wie z. B. Bremsanlage oder Mitteln zur Sensierung der Raddrehzahlen. Das erfindungsgemäße Verfahren ist außerdem sehr einfach durch Verwendung sehr weniger Rechenschritte in einem Steuerprogramm für einen Mikroprozessor realisierbar. Ein weiterer Vorteil ist, daß die in Fahrzeugeinheiten neuerer Bauart ohnehin vorhandenen Sensiermittel zur Bestimmung von schlupfbehafteten Raddrehzahlsignalen verwendet werden können. Weitere Sensiermittel sind nicht erforderlich. Hierdurch ist das Verfahren sehr kostengünstig auch in bereits vorhandenen Fahrzeugeinheiten einsetzbar.

Beim Auftreten eines entsprechend großen Unterschiedes zwischen den Bremskräften der Teile der Fahrzeugeinheit wird eine Abstimmung der Bremskräfte durch Veränderung von sogenannten Bremssteuerwerten, die zur Erzeugung der Bremskräfte vorgesehen sind, vorgenommen. Als Bremssteuerwerte können beispielsweise pneumatische oder hydraulische Bremsdrücke oder auch elektrische Signale Verwendung finden.

Zur Abstimmung der Bremskräfte ist es prinzipiell möglich, die beiden den Teilen der Fahrzeugeinheit zugeordneten Bremssteuerwerte derart zu verändern, daß der eine Bremssteuerwert verringert und der andere in entsprechendem Maß erhöht wird. In einer vorteilhaften Weiterbildung der Erfindung wird jedoch nur einer der beiden Bremssteuerwerte bezüglich des anderen Bremssteuerwertes, der in einem als Bezugsteil definierten Teil der Fahrzeugeinheit eingestellt ist, verändert. Hierdurch kann der Rechenaufwand für die Ausführung des erfindungsgemäßen Verfahrens minimiert werden.

Als Maß für den Unterschied zwischen den an den beiden Teilen der Fahrzeugeinheit jeweils vorhandenen Bremskräften wird eine Größe verwendet, die im folgenden als Unterschiedswert bezeichnet wird. Der Unterschiedswert stellt eine Rechengröße dar, die keinen unmittelbaren Bezug zu einer physikalischen Kraft, gemessen in Newton, hat.

In besonders vorteilhafter Weise kann der Unterschiedswert sowohl als absoluter Unterschied, d. h. als Differenz zwischen den zeitlichen Ableitungen der Teilfahrzeug-Geschwindigkeiten, oder auch als relativer Unterschied, d. h. als Quotient der zeitlichen Ableitungen der Teilfahrzeug-Geschwindigkeiten, bestimmt werden. Hierdurch kann das Verfahren auch bei unterschiedlichsten Arten von Steuereinrichtungen bzw. Mikroprozessoren angewendet werden. Durch die Wahl eines für den jeweiligen Mikroprozessor besonders geeigneten Rechenschrittes, also Subtraktion oder Division, zur Bestimmung des Unterschiedswertes kann das Verfahren an die jeweiligen Fähigkeiten des Mikroprozessors optimal angepaßt werden, so daß das Verfahren mit möglichst geringer Rechenzeit ausgeführt werden kann.

Gemäß der Erfindung wird der Unterschiedswert in einer stationären Bremsphase, d. h. in einer Phase, in der der Bremssteuerwert des Bezugsteils der Fahrzeugeinheit konstant ist oder sich nur geringfügig verändert, bestimmt wird. Dies hat den Vorteil, daß eventuelle Änderungen bzw. Gradienten des Bremssteuerwertes im erfindungsgemäßen Verfahren rechnerisch nicht berücksichtigt werden müssen, wodurch ebenfalls der Rechenaufwand für die Ausführung des Verfahrens minimiert wird.

In einer vorteilhaften Weiterbildung der Erfindung wird die Veränderung des Bremssteuerwertes schrittweise während einer oder mehrerer Bremsungen durchgeführt. Durch die Verwendung mehrerer Schritte zur Anpassung des Bremssteuerwertes und gegebenenfalls mehrerer Bremsungen ist es möglich, die Größe der einzelnen Schritte relativ klein auszubilden. Dies hat den Vorteil, daß keine heftigen, ruckartigen Bremskraftänderungen erfolgen. Hierdurch wird der Fahrkomfort bei einer Bremsung verbessert und die Teile der Fahrzeugeinheit werden geschont.

In einer besonders vorteilhaften Weiterbildung der Erfindung wird das Verhältnis des am zweiten Teil der Fahrzeugeinheit im Verlauf einer Bremsung eingestellten Bremssteuerwertes zu dem am Bezugsteil eingestellten Bremssteuerwert als Bremssteuerfaktor ermittelt und für eine spätere Verwendung gespeichert. Hierdurch ist es möglich, den zu Beginn einer Bremsung verwendeten Anfangswert für den Bremssteuerwert des zweiten Teils der Fahrzeugeinheit mit dem Bremssteuerfaktor zu korrigieren, so daß im Verlaufe mehrerer Bremsungen bereits zu Beginn der jeweiligen Bremsung eine annähernd optimale Einstellung der Bremssteuerwerte und somit eine Abstimmung der Bremskräfte ermöglicht wird.

Bei Fahrzeugeinheiten, deren Teile während einer längeren Betriebsdauer miteinander verbunden sind, kann auf diese Weise bereits bei der ersten Bremsung nach Fahrtbeginn eine gute Abstimmung der Bremskräfte erzielt werden. Bei einem Wechsel der Teile der Fahrzeugeinheit, z. B. nach Ankuppeln eines anderen Anhängefahrzeuges an das Zugfahrzeug, erfolgt dann automatisch eine erneute Abstimmung des Bremssteuerfaktors im Verlaufe mehrerer Bremsungen.

Es kann in der Praxis außerdem vorkommen, daß die Geschwindigkeitssignale von unterschiedlich aufgebauten Sensiermitteln, die zudem an verschiedenartige elektronische Steuereinrichtungen in den Teilen der Fahrzeugeinheit angeschlossen sind, ermittelt werden. In solchen Fällen kommt es vor, daß die eingangs erwähnte zentrale, für die Abstimmung der Bremskräfte zuständige Einrichtung Signale verarbeiten muß, die neben dem zeitlichen Versatz auch eine unterschiedliche Signalskalierung, d. h. eine unterschiedliche zahlenmäßige Darstellung der Geschwindigkeitswerte, aufweisen können. Unterschiedliche Signalskalierungen können beispielsweise von einem unterschiedlichen Abnutzungsgrad der Reifen an dem Zugfahrzeug bzw. dem Anhängefahrzeug hervorgerufen werden.

Gemäß einer weiteren vorteilhaften Weiterbildung der Erfindung wird daher während ungebremster Fahrt der Fahrzeugeinheit ein Korrekturfaktor aus den Teilfahrzeug-Geschwindigkeiten ermittelt und während einer Bremsung für eine Korrektur der zeitlichen Ableitungen der Teilfahrzeug-Geschwindigkeiten verwendet. Hierdurch können unterschiedliche Signalskalierungen in den Teilfahrzeug-Geschwindigkeiten kompensiert werden.

Die Erfindung wird im folgenden anhand eines Ausführungsbeispiels unter Zuhilfenahme von Zeichnungen näher erläutert.

Es zeigen
- Fig. 1: eine schematische Darstellung der die Erfindung betreffenden Komponenten einer Bremsanlage in einer Fahrzeugeinheit und
- Fig. 2 und 3: eine Darstellung des erfindungsgemäßen Verfahrens als zwei Teilabschnitte eines Flußdiagramms.

In den Figuren werden gleiche Bezugszeichen für einander entsprechende Teile und Signale verwendet.

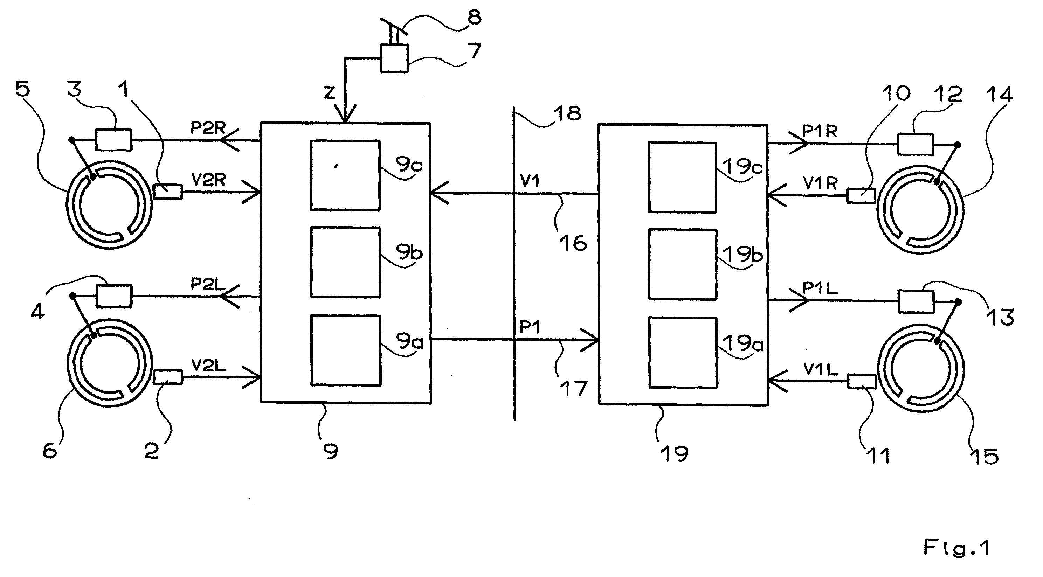

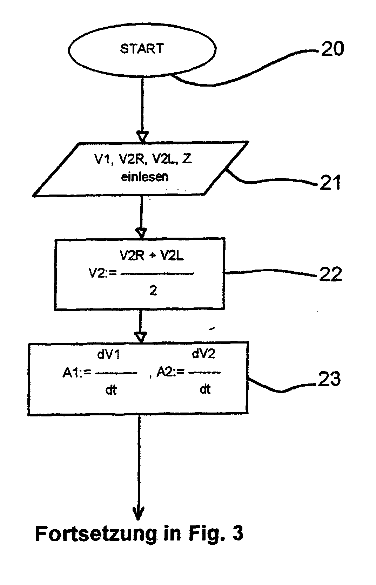

In der Fig. 1 sind die Verbindungslinien zwischen den äußeren mechanischen, elektrischen oder elektromechanischen Komponenten (1, 2, 3, 4, 7, 9, 10, 11, 12, 13, 19) mit Signalnamen (V2R, V2L, P2R, P2L, Z, V1, P1, V1R, V1L, P1R, P1L) bezeichnet. Diese Verbindungslinien sind unabhängig von der physikalischen Repräsentation der Signale als logische Signalkanäle zu verstehen. Die Richtung des Signalflusses in den Signalkanälen ist durch Pfeile gekennzeichnet. Die Signale werden vorzugsweise als elektrische Digitalsignale dargestellt. Als Signalkanäle werden dann elektrische Leitungen benutzt, die z. B. als serielles Bussystem ausgebildet sein können. In diesem Fall können die verschiedenen logischen Signalkanäle gemäß Fig. 1 auch als ein einziges Bussystem oder eine Anordnung von mehreren Bussystemen, an das die Komponenten (1, 2, 3, 4, 7, 9, 10, 11, 12, 13, 19) angeschlossen sind, physikalisch repräsentiert werden.

Die in der Fig. 1 dargestellte Anordnung stellt vorzugsweise jeweils Teile der Bremsanlagen eines Zugfahrzeuges und eines damit zu einer Fahrzeugeinheit verbundenen Anhängefahrzeuges dar. Hierbei sind die Teile (1, 2, 3, 4, 5, 6, 7, 8, 9) dem Zugfahrzeug und die Teile (10, 11, 12, 13, 14, 15, 19) dem Anhängefahrzeug zugeordnet. Zugfahrzeug und Anhängefahrzeug sind zum Datenaustausch wenigstens über die Signalkanäle (16, 17) verbunden. Diese Signalkanäle (16, 17) werden im Falle des Abkoppelns des Anhängers von dem Zugfahrzeug an einer Trennstelle (18) aufgetrennt. Die Trennstelle (18) wird vorzugsweise von einer elektrischen und/oder pneumatischen Steckverbindung physikalisch repräsentiert.

Es ist jedoch auch möglich, das erfindungsgemäße Verfahren in einem einzigen Teil der Fahrzeugeinheit, z. B. im Zugfahrzeug, einzusetzen. In diesem Fall sind die in der Fig. 1 dargestellten Komponenten (1, 2, 3, 4, 5, 6) bzw. (10, 11, 12, 13, 14, 15) als Achsgruppen dieses Fahrzeuges, insbesondere Vorder- und Hinterachse, zu verstehen. Die als elektronische Steuergeräte ausgebildeten Teile (9, 19) können dann auch zu einem einzigen Steuergerät zusammengefaßt sein.

In der Fig. 1 ist ein elektrisch steuerbares Bremssystem (EBS) dargestellt, das als mechanische Komponenten die Radbremsen (5, 6) an einer vorzugsweise nicht angetriebenen Achse des Zugfahrzeuges und die Radbremsen (14, 15) an einer Achse des Anhängefahrzeuges aufweist.

Die Radbremsen (5, 6, 14, 15) sind zur Betätigung mit jeweils einem Aktuator (3, 4, 12, 13) versehen. Die Aktuatoren (3, 4, 12, 13) betätigen über mechanische Gestänge die ihnen jeweils zugeordneten Radbremsen (5, 6, 14, 15). Die Aktuatoren werden mit den Bremssteuerwerten (P1R, P1L, P2R, P2L) beaufschlagt. Zur Umsetzung eines Bremssteuerwertes in eine Betätigungskraft bzw. einen Betätigungshub für die Radbremse ist ein Aktuator vorzugsweise mit einer elektronischen Steuereinrichtung zur Verarbeitung des Bremssteuerwertes, einem Druckmittelanschluß und einem hiermit verbundenen Ventil zur Zuführung des Druckmittels zu einem Stellzylinder ausgestattet. Hierbei steuert die elektronische Steuereinrichtung das Ventil derart, daß der Bremsdruck an der Radbremse dem Bremssteuerwert entspricht. Der Druckmittelanschluß des Aktuators ist mit einer hier nicht dargestellten Druckmittelanlage, die z. B. einen Kompressor und einen Druckluftvorratsbehälter aufweisen kann, verbunden.

Weiterhin ist jedem Rad ein Drehgeschwindigkeitssensor (1, 2, 10, 11) zugeordnet, der mit einem an dem jeweiligen Rad angebrachten Polrad (nicht dargestellt) in Wirkverbindung steht und ein die Drehgeschwindigkeit des Rades darstellendes Signal (V1R, V1L, V2R, V2L) an ein den jeweiligen Drehgeschwindigkeitssensoren zugeordnetes Steuergerät (9, 19) abgibt. Die Ermittlung von Drehgeschwindigkeiten von Fahrzeugrädern ist im übrigen im Zusammenhang mit Antiblockiersystemen hinreichend beschrieben worden.

Ein weiteres Eingangssignal (Z) für das Steuergerät (9) wird von einem Bremswertgeber (7) erzeugt, der mechanisch mit dem Bremspedal (8) des Fahrzeuges verbunden ist. Bei Betätigung des Bremspedals (8) durch den Fahrer gibt der Bremswertgeber (7) ein Signal (Z) ab, das der von dem Fahrer gewünschten Verzögerung des Fahrzeuges entspricht.

Das Steuergerät (9) führt eine Reihe von Steuerungsund Regelungsaufgaben in dem Zugfahrzeug aus. Eine dieser Aufgaben besteht darin, in Abhängigkeit von dem Verzögerungswunsch (Z) des Fahrers unter Zuhilfenahme weiterer Eingangssignale (V1, V2R, V2L) die Radbremsen (5, 6, 14, 15) derart anzusteuern, daß die Fahrzeugeinheit die gewünschte Verzögerung erreicht und während einer solchen Bremsung einen stabilen Fahrzustand beibehält. Hierzu führt das Steuergerät (9) verschiedene sich gegenseitig beeinflussende und einander überlagerte Verfahren durch, wie z. B. Blockierschutz (ABS) bei niedrigen Fahrbahn-Reibwerten, Minimierung des Bremsbelagverschleißes und eine Abstimmung der Bremskräfte zwischen Zugfahrzeug und Anhängefahrzeug. Diese Verfahren sind in der Fig. 1 durch die Blöcke (9a, 9b, 9c) symbolisch dargestellt. Jedem der Verfahren (9a, 9b, 9c) stehen sämtliche Eingangssignale des Steuergerätes (9) zur Verfügung, soweit diese benötigt werden.

So kann z. B. in dem Block (9c) eine Bestimmung der Bremssteuerwerte (P2R, P2L) für das Zugfahrzeug in Abhängigkeit von dem Eingangssignal (Z) mittels Zuordnung aus einer gespeicherten Zuordnungstabelle oder durch Verwendung einer geeigneten Zuordnungsfunktion erfolgen, wie z. B. aus der DE 44 38 222 A1 bekannt.

In analoger Weise wie das im Zugfahrzeug vorgesehene Steuergerät (9) führt das Steuergerät (19) eine Reihe von Steuerungs- und Regelungsaufgaben in dem Anhängefahrzeug aus, z. B. ebenfalls Blockierschutz und Minimierung des Bremsbelagverschleißes. Da die Abstimmung der Bremskräfte in diesem Ausführungsbeispiel von dem Steuergerät (9) durchgeführt wird, ist eine derartige Funktion in dem Steuergerät (19) nicht vorgesehen. Statt dessen ist in dem Steuergerät (19) ein Verfahren vorgesehen, mittels dessen eine Berechnung des an das Zugfahrzeug übermittelten Geschwindigkeitssignals (V1) als arithmetischer Mittelwert aus den Drehgeschwindigkeitssignalen (V1R, V1L) und eine Verarbeitung des von dem Zugfahrzeug empfangenen Bremssteuerwertes (P1) zu den Bremssteuerwerten (P1R, P1L) zur Beaufschlagung der Aktuatoren (12, 13) erfolgt. Die zuvor erwähnten Verfahren sind in der Fig. 1 durch die Blöcke (19a, 19b, 19c) symbolisch dargestellt.

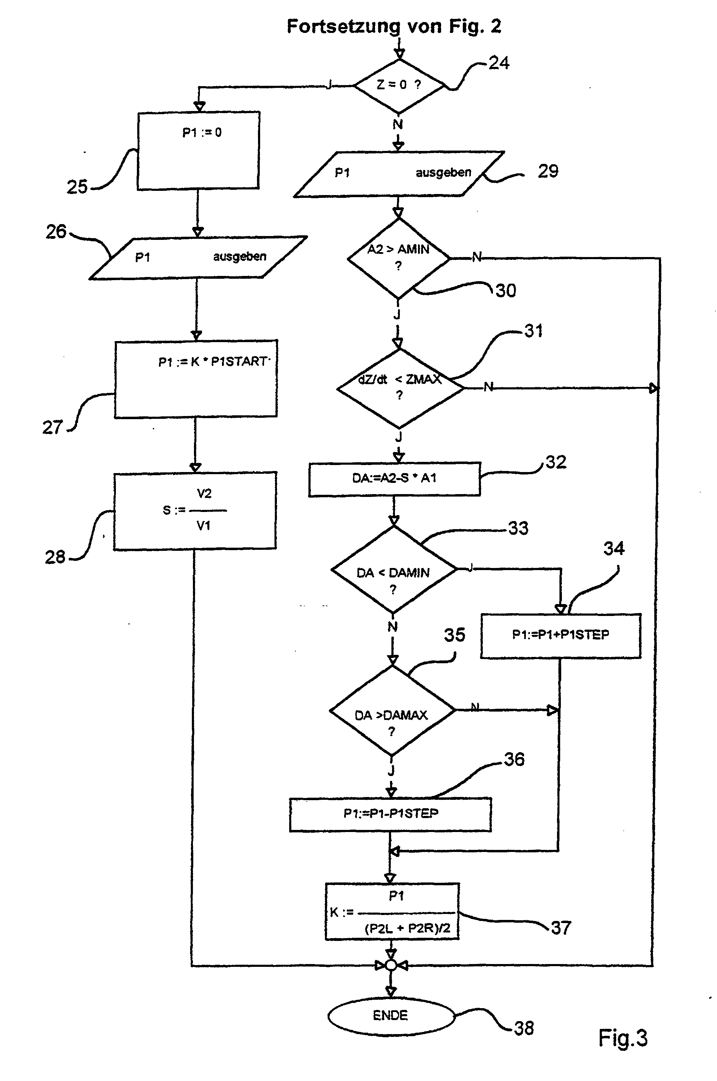

Eines der zuvor bezüglich des Steuergerätes (9) genannten Verfahren, nämlich eine Abstimmung von Bremskräften zwischen den miteinander verbundenen Teilen der Fahrzeugeinheit, ist in den Fig. 2 und 3 näher dargestellt. Das Verfahren (9a) beginnt in der Fig. 2 mit dem Block (20).

In einem darauffolgenden Datentransferblock (21) werden die Signale (V1, V2R, V2L, Z) eingelesen. Aus den die einzelnen Drehgeschwindigkeiten der nicht angetriebenen Räder des Zugfahrzeuges repräsentierenden Drehgeschwindigkeitssignalen (V2R, V2L) wird in einem Zuweisungsblock (22) sodann als Geschwindigkeitssignal (V2) der arithmetische Mittelwert gebildet. Als weitere vorbereitende Maßnahme werden in einem Zuweisungsblock (23) die zeitlichen Ableitungen der Drehgeschwindigkeitssignale (V1, V2) des Zugfahrzeuges und des Anhängefahrzeuges als Verzögerungssignale (A1, A2) berechnet. Die numerische Berechnung einer zeitlichen Ableitung in einem Verfahren, das von einem Mikroprozessor ausgeführt wird, ist im übrigen im Zusammenhang mit elektronischen Steuergeräten für Antiblockiersysteme oder Einspritzanlagen für Kraftfahrzeuge hinreichend beschrieben worden und wird daher an dieser Stelle nicht weiter ausgeführt.

Daraufhin wird mit den in der Fig. 3 dargestellten Programmsschritten fortgefahren.

In einem Verzweigungsblock (24) wird überprüft, ob durch den Fahrer mittels des Bremswertgebers (7) gerade eine Bremsung der Fahrzeugeinheit gewünscht wird (Z ≠ 0) oder nicht (Z = 0). Wenn keine Bremsung gewünscht wird, wird das Verfahren mit dem Zuweisungsblock (25) fortgesetzt. Dort wird der Bremssteuerwert (P1) auf einen neutralen Wert (hier 0), der für den Zustand einer unbetätigten Bremseinrichtung vorgesehen ist, gesetzt und sodann im Datentransferblock (26) an das weitere Steuergerät (19) ausgegeben.

Hiernach wird der Bremssteuerwert (P1) auf einen Anfangswert gesetzt, von dem im Falle des Beginns einer Bremsung auszugehen ist. Bei der Wahl des Anfangswertes kann beispielsweise eine Ansprechhysterese in den Bremseinrichtungen berücksichtigt werden. Der Bremssteuerwert (P1) für das Anhängefahrzeug wird auf einen mit einem Bremssteuerfaktor (K) multiplizierten Anfangswert (P1START) gesetzt. Der Bremssteuerfaktor (K) wird im Laufe einer Bremsung als relative Abweichung zwischen dem während der Bremsung eingestellten Bremssteuerwert (P1) und dem Mittelwert der in dem Block (9c) bestimmten Bremssteuerwerte (P2L, P2R) des Zugfahrzeuges ermittelt, so daß im Laufe einer oder gegebenenfalls mehrerer Bremsungen ein geeigneter Anfangswert für den Bremssteuerwert des Anhängefahrzeuges bereits zu Beginn der Bremsung festgelegt werden kann. Der Bremssteuerfaktor (K) ist vor der ersten Bremsung auf einen neutralen Wert (hier 1) gesetzt.

In einem Zuweisungsblock (28) wird ein Korrekturfaktor (S) als Quotient aus den Geschwindigkeitssignalen (V2, V1) berechnet. Der Korrekturfaktor (S) dient zur Korrektur von unterschiedlichen Signalskalierungen bei den Geschwindigkeitssignalen (V1, V2), z. B. aufgrund von unterschiedlich starker Reifenabnutzung. Für die Bestimmung des Korrekturfaktors (S) ist es auch vorteilhaft, die Geschwindigkeitssignale (V1, V2) in bekannter Weise einer Filterung zu unterwerfen, wobei vorzugsweise eine Filterung mit relativ großer Zeitkonstante (z. B. 60s), verwendet wird. Hierdurch ist es möglich, nur zeitweilig auftretende Unterschiede in den Signalskalierungen, wie sie z. B. bei Kurvenfahrt auftreten, auszugleichen.

Der bisher beschriebene, während ungebremster Fahrt der Fahrzeugeinheit ausgeführte Verfahrenszweig endet daraufhin in dem Block (38).

Wenn vom Fahrer der Fahrzeugeinheit eine Bremsung gewünscht wird (Z ≠ 0), dann wird in dem Verzweigungsblock (24) zu dem Datentransferblock (29) verzweigt, in dem, analog zu dem Datentransferblock (26), der Bremssteuerwert (P1) ausgegeben wird. In den darauffolgenden Verzweigungsblöcken (30, 31) werden verschiedene Bedingungen überprüft und bei Nichterfüllung einer der Bedingungen jeweils zum Block (38) verzweigt wird, womit das Verfahren gemäß Fig. 3 endet. So wird im Verzweigungsblock (30) überprüft, ob die Fahrzeugverzögerung, d. h. in diesem Fall das Verzögerungssignal (A2) des Zugfahrzeuges, ein vorbestimmtes, für eine zuverlässige Durchführung des Verfahrens notwendiges Maß (AMIN) überschreitet. Hierdurch können Veränderungen des Bremssteuerwertes (P1) infolge von den Eingangssignalen (V1, V2 bzw. A1, A2) überlagerten Rauschanteilen vermieden werden. Im Verzweigungsblock (31) wird überprüft, ob eine sogenannte stationäre Bremsphase im jeweiligen Zeitpunkt der Bremsung vorliegt. Als stationäre Bremsphase wird ein Zeitabschnitt der Bremsung bezeichnet, indem sich der von dem Fahrer vorgegebene Verzögerungswunsch (Z) nicht oder nur sehr langsam verändert. Hierfür wird die zeitliche Ableitung des Verzögerungswunsches (Z) mit einem vorbestimmten Wert (ZMAX) verglichen.

Geeignete Werte hierfür sind z. B. AMIN = 1 m/s² und ZMAX = 0,1 bar/s.

Wenn die in den zuvor beschriebenen Verzweigungsblöcken (30, 31) genannten Bedingungen erfüllt sind, dann wird in einem Zuweisungsblock (32) ein Differenzwert (DA) als Differenz aus dem Verzögerungssignal (A2) des Zugfahrzeuges und dem mit dem Korrekturfaktor (S) multiplizierten Verzögerungssignal (A1) des Anhängefahrzeuges berechnet. Diese Differenz (DA) stellt dann ein Maß für den Unterschied zwischen den an den beiden Teilen der Fahrzeugeinheit jeweils vorhandenen Bremskräften dar. Mittels des aus den Geschwindigkeitssignalen (V1, V2) während ungebremster Fahrt ermittelten Korrekturfaktors (S) wird hierbei eine eventuell vorhandene, von unterschiedlichen Signalskalierungen her rührende Abweichung zwischen den Verzögerungssignalen (A1, A2) kompensiert.

Die Differenz (DA) wird in den Verzweigungsblöcken (33, 35) mit einem unteren (DAMIN) und einem oberen (DAMAX) Grenzwert verglichen. Bei Unterschreiten des unteren Grenzwertes (DAMIN) wird in einem Zuweisungsblock (34) der Bremssteuerwert (P1) des Anhängefahrzeuges um einen Schritt (P1STEP) mit vorbestimmter Größe erhöht. Bei Überschreitung des oberen Grenzwertes (DAMAX) wird hingegen der Bremssteuerwert (P1) um den Schritt (P1STEP) im Zuweisungsblock (36) verringert. Anderenfalls, d. h. wenn die Differenz (DA) in dem durch die Grenzwerte (DAMIN, DAMAX) festgelegten Bereich liegt, wird der Bremssteuerwert (P1) nicht verändert. Geeignete Grenzwerte sind z. B. DAMIN = -0,2 m/s² und DAMAX = 0,2 m/s². Ein geeigneter Wert für den Schritt (P1STEP) ist ein Prozent des für den Bremssteuerwert (P1) insgesamt zur Verfügung stehenden Wertebereiches.

In einem Zuweisungsblock (37) wird der Bremssteuerfaktor (K) als Quotient aus dem gegebenenfalls zuvor geänderten Bremssteuerwert (P1) und dem Mittelwert der Bremssteuerwerte (P2L, P2R) berechnet. Die Berechnung kann fortlaufend bei jeder Ausführung der zuvor beschriebenen Verfahrensschritte durchgeführt werden. Es ist auch möglich, die Berechnung gemäß Zuweisungsblock (37) nur ein einziges Mal am Ende einer Bremsung durchzuführen. Hierdurch kann der Aufwand an Rechenzeit für die Ausführung des Verfahrens verringert werden.

Der Bremssteuerfaktor (K) kann dann beispielsweise in einem flüchtigen Schreib-/Lesespeicher (RAM) gespeichert werden. Vorteilhafter ist jedoch die Speicherung in einem nichtflüchtigen Speicher (EEPROM), der insbesondere die Eigenschaft aufweist, auch nach Abschalten der Stromversorgung für das Steuergerät (9) seinen Speicherinhalt beizubehalten. Hierdurch kann auch nach Abstellen und späterer Wiederinbetriebnahme der Fahrzeugeinheit der aus vorhergehenden Bremsungen ermittelte Bremssteuerfaktor sofort wieder verwendet werden, ohne daß hierfür erneute Bremsungen notwendig wären.

Das Verfahren gemäß Fig. 3 endet daraufhin in dem Block (38).

## Patentansprüche

1. Verfahren zur Abstimmung von Bremskräften zwischen jeweils zwei miteinander verbundenen Teilen einer Fahrzeugeinheit, wobei jedes der beiden Teile der Fahrzeugeinheit über je eine Bremseinrichtung (3, 4, 5, 6, 12, 13, 14, 15) verfügt, die bei einer Beaufschlagung mit einem Bremssteuerwert (P1, P1L, P1R, P2L, P2R) eine Bremskraft erzeugt, mit folgenden Merkmalen:
a) jede der beiden Bremseinrichtungen (3, 4, 5, 6, 12, 13, 14, 15) wird mit einem Bremssteuerwert (P1, P1L, P1R, P2L, P2R), der zu Beginn einer Bremsung von jeweils einem Anfangswert (P1START, P2START) ausgeht, beaufschlagt,
b) für die beiden Teile der Fahrzeugeinheit wird jeweils eine Teilfahrzeug-Geschwindigkeit (V1, V2) bestimmt, die aus schlupfbehafteten Raddrehzahlsignalen (V1L, V1R, V2L, V2R) von am jeweiligen Teil der Fahrzeugeinheit angeordneten Rädern ermittelt wird,
c) zumindest während eines Zeitabschnittes der Bremsung wird ein Unterschiedswert (DA) als Unterschied zwischen den zeitlichen Ableitungen (A1, A2) der ermittelten Teilfahrzeug-Geschwindigkeiten (V1, V2) bestimmt,
d) wenn der Unterschiedswert (DA) von einem für den Zustand aufeinander abgestimmter Bremskräfte erwünschten Wert wenigstens um ein festgelegtes Maß (DAMIN, DAMAX) abweicht, wird wenigstens einer der Bremssteuerwerte (P1, P1L, P1R, P2L, P2R) verändert,
**dadurch gekennzeichnet, daß** als Zeitabschnitt für die Bestimmung des Unterschiedswertes (DA) eine stationäre Bremsphase verwendet wird.

2. Verfahren nach Patentanspruch 1, **gekennzeichnet durch** folgende Merkmale:
a) das eine Teil der Fahrzeugeinheit wird als Bezugsteil für das zweite Teil der Fahrzeugeinheit verwendet,
b) wenn der Unterschiedswert (DA) einen oberen Grenzwert (DAMAX) überschreitet, wird der am zweiten Teil der Fahrzeugeinheit eingestellte Bremssteuerwert (P1) bezüglich des am Bezugsteil eingestellten Bremssteuerwertes (P2L, P2R) verringert,
c) wenn der Unterschiedswert (DA) einen unteren Grenzwert (DAMIN) unterschreitet, wird der am zweiten Teil der Fahrzeugeinheit eingestellte Bremssteuerwert (P1) bezüglich des am Bezugsteil eingestellten Bremssteuerwertes (P2L, P2R) erhöht.

3. Verfahren nach wenigstens einem der Patentansprüche 1 oder 2, **dadurch gekennzeichnet, daß** der Unterschiedswert (DA) als Differenz zwischen den zeitlichen Ableitungen (A1, A2) der Teilfahrzeug-Geschwindigkeiten (V1, V2) bestimmt wird, wobei die zeitliche Ableitung (A2) der Teilfahrzeug-Geschwindigkeit (V2) des Bezugsteils als Minuend verwendet wird.

4. Verfahren nach wenigstens einem der Patentansprüche 1 oder 2, **dadurch gekennzeichnet, daß** der Unterschiedswert (DA) als Quotient der zeitlichen Ableitungen (A1, A2) der Teilfahrzeug-Geschwindigkeiten (V1, V2) bestimmt wird, wobei die zeitliche Ableitung (A2) der Teilfahrzeug-Geschwindigkeit (V2) des Bezugsteils als Dividend verwendet wird.

5. Verfahren nach wenigstens einem der vorhergehenden Patentansprüche, **dadurch gekennzeichnet, daß** die Veränderung des Bremssteuerwertes bzw. der Bremssteuerwerte (P1, P1L, P1R, P2L, P2R) aufgrund des Unterschiedswertes (DA) nur dann durchgeführt wird, wenn die Fahrzeugverzögerung (A2) ein vorbestimmtes Maß (AMIN) überschreitet.

6. Verfahren nach wenigstens einem der vorhergehenden Patentansprüche, **dadurch gekennzeichnet, daß** die Veränderung des Bremssteuerwertes bzw. der Bremssteuerwerte (P1, P1L, P1R, P2L, P2R) schrittweise während einer oder mehrerer Bremsungen erfolgt, wobei wenigstens die Schritte a) bis d) des Patentanspruchs 1 zyklisch ausgeführt werden.

7. Verfahren nach wenigstens einem der vorhergehenden Patentansprüche, **dadurch gekennzeichnet, daß** das Verhältnis des am zweiten Teil der Fahrzeugeinheit im Verlaufe einer Bremsung eingestellten Bremssteuerwertes (P1) zu dem am Bezugsteil eingestellten Bremssteuerwert (P2L, P2R) als Bremssteuerfaktor (K) ermittelt und für eine spätere Verwendung gespeichert wird.

8. Verfahren nach Patentanspruch 7, **dadurch gekennzeichnet, daß** der zu Beginn einer Bremsung zur Festlegung des Bremssteuerwertes (P1) des zweiten Teils der Fahrzeugeinheit verwendete Anfangswert (P1START) mit dem Bremssteuerfaktor (K) korrigiert wird.

9. Verfahren nach wenigstens einem der vorhergehenden Patentansprüche, **gekennzeichnet durch** folgende Merkmale:
a) während ungebremster Fahrt der Fahrzeugeinheit wird ein Korrekturfaktor (S) aus den Teilfahrzeug-Geschwindigkeiten (V1, V2) ermittelt,
b) während einer Bremsung der Fahrzeugeinheit wird eine der zeitlichen Ableitungen (A1, A2) der Teilfahrzeug-Geschwindigkeiten (V1, V2) mit dem Korrekturfaktor (S) korrigiert.

## Claims

1. Method for synchronising the brake forces between two parts of a vehicle unit connected with one another, each of the two parts of the vehicle unit having a respective brake device (3, 4, 5, 6, 12, 13, 14, 15) that generates a brake force when acted upon with a brake control value (P1, P1L, P1R, P2L, P2R), the method having the following features:
a) each of the two brake devices (3, 4, 5, 6, 12, 13, 14, 15) is acted upon with a brake control value (P1, P1L, P1R, P2L, P2R) that at the commencement of a braking action starts from a respective starting value (P1START, P2START),
b) for the two parts of the vehicle unit a respective vehicle-part velocity (V1, V2) is determined, which velocity is determined from slip-affected wheel speed signals (V1L, V1R, V2L, V2R) of wheels arranged on the respective part of the vehicle unit,
c) at least during a time interval within the braking a difference value (DA) is determined as difference between the time derivatives (A1, A2) of the determined vehicle-part velocities (V1, V2),
d) when the difference value (DA) departs at least by a fixed degree (DAMIN, DAMAX) from a desired value for the state in which the brake forces are synchronised with one another, at least one of the brake control values (P1, P1L, P1R, P2L, P2R) is changed,
**characterised in that** a stationary braking phase is used as time interval for determining the difference value (DA).

2. Method according to claim 1, **characterised by** the following features:
a) the one part of the vehicle unit is used as reference part for the second part of the vehicle unit,
b) when the difference value (DA) exceeds an upper limit value (DAMAX), the brake control value (P1) set at the second part of the vehicle unit is reduced relative to the brake control value (P2L, P2R) set at the reference part,
c) when the difference value (DA) falls below a lower limit value (DAMIN), the brake control value (P1) set at the second part of the vehicle unit is increased relative to the brake control value (P2L, P2R) set at the reference part.

3. Method according to at least one of claims 1 and 2, **characterised in that** the difference value (DA) is determined as the difference between the time derivatives (A1, A2) of the vehicle-part velocities (V1, V2), the time derivative (A2) of the vehicle-part velocity (V2) of the reference part being used as minuend.

4. Method according to at least one of claims 1 and 2, **characterised in that** the difference value (DA) is determined as the quotient of the time derivatives (A1, A2) of the vehicle-part velocities (V1, V2), the time derivative (A2) of the vehicle-part velocity (V2) of the reference part being used as dividend.

5. Method according to at least one of the preceding claims, **characterised in that** the modification of the brake control value or the brake control values (P1, P1L, P1R, P2L, P2R) is carried out on the basis of the difference value (DA) only when the vehicle deceleration (A2) exceeds a predetermined degree (AMIN).

6. Method according to at least one of the preceding claims, **characterised in that** the modification of the brake control value or the brake control values (P1, P1L, P1R, P2L, P2R) is carried out step-wise during one or several braking actions, at least the steps a) to d) of claim 1 being executed cyclically.

7. Method according to at least one of the preceding claims, **characterised in that** the ratio of the brake control value (P1) set at the second part of the vehicle unit in the course of a braking action to the brake control value (P2L, P2R) set at the reference part is determined as brake control factor (K) and is stored for later use.

8. Method according to claim 7, **characterised in that** the starting value (P1START) used at the commencement of a braking action to determine the brake control value (P1) of the second part of the vehicle unit is corrected with the brake control factor (K).

9. Method according to at least one of the preceding claims, **characterised by** the following features:
a) during unbraked travel of the vehicle unit a correction factor (S) is determined from the vehicle-part velocities (V1, V2),
b) during a braking action of the vehicle unit one of the time derivatives (A1, A2) of the vehicle-part velocities (V1, V2) is corrected with the correction factor (S).

## Revendications

1. Procédé de mise en accord des forces de freinage entre deux parties respectives d'une unité de véhicule reliées l'une à l'autre, chacune des deux parties de l'unité de véhicule disposant d'un dispositif de freinage (3, 4, 5, 6, 12, 13, 14, 15) qui génère une force de freinage lors de l'attaque par une valeur de commande de freinage (P1, P1L, P1R, P2L, P2R), présentant les éléments suivants :
a) chacun des deux dispositifs de freinage (3, 4, 5, 6, 12, 13, 14, 15) est attaqué par une valeur de commande de freinage (P1, P1L, P1R, P2L, P2R) qui part d'une valeur initiale respective (P1START, P2START) au début d'un freinage,
b) pour les deux parties de l'unité de véhicule, on définit une vitesse respective de véhicule partiel (V1, V2) qui est déterminée à partir de signaux de vitesse de rotation de roues (V1L, V1R, V2L, V2R) affectés d'un patinage des roues agencées sur la partie respective de l'unité de véhicule,
c) au moins pendant une période temporelle du freinage, on définit une valeur différentielle (DA) à titre de différence entre les dérivées temporelles (A1, A2) des vitesses de véhicule partiel déterminées (V1, V2),
d) au cas où la valeur différentielle (DA) s'écarte d'une valeur fixée (DAMIN, DAMAX) par rapport à la valeur désirée pour l'état des forces de freinage mises en accord, l'une au moins des valeurs de commande de freinage (P1, P1L, P1R, P2L, P2R) est modifiée,
**caractérisé en ce que** l'on utilise à titre de période temporelle pour définir la valeur différentielle (DA) une phase de freinage stationnaire.

2. Procédé selon la revendication 1, **caractérisé par** les éléments suivants :
a) l'une des parties de l'unité de véhicule est utilisée à titre de partie de référence pour la deuxième partie de l'unité de véhicule,
b) au cas où la valeur différentielle (DA) dépasse une valeur limite supérieure (DAMAX), la valeur de commande de freinage (P1) réglée au niveau de la deuxième partie de l'unité de véhicule est réduite par rapport à la valeur de commande de freinage (P2L, P2R) réglée au niveau de la partie de référence,
c) au cas où la valeur différentielle (DA) passe au-dessous d'une valeur limite inférieure (DAMIN), la valeur de commande de freinage (P1) réglée au niveau de la deuxième partie de l'unité de véhicule est augmentée par rapport à la valeur de commande de freinage (P2L, P2R) réglée au niveau de la partie de référence.

3. Procédé selon l'une ou l'autre des revendications 1 et 2, **caractérisé en ce que** la valeur différentielle (DA) est définie à titre de différence entre les dérivées temporelles (A1, A2) des vitesses de véhicule partiel (V1, V2), la dérivée temporelle (A2) de la vitesse de véhicule partiel (V2) de la partie de référence étant utilisée comme diminuende.

4. Procédé selon l'une ou l'autre des revendications 1 et 2, **caractérisé en ce que** la valeur différentielle (DA) est définie à titre de quotient des dérivées temporelles (A1, A2) des vitesses de véhicule partiel (V1, V2), la dérivée temporelle (A2) de la vitesse de véhicule partiel (V2) de la partie de référence étant utilisée comme dividende.

5. Procédé selon l'une au moins des revendications précédentes, **caractérisé en ce que** l'on effectue la modification de la valeur de commande de freinage ou des valeurs de commande de freinage (P1, P1L, P1R, P2L, P2R) en raison de la valeur différentielle (DA) uniquement lorsque la décélération de véhicule (A2) dépasse une valeur prédéterminée (AMIN).

6. Procédé selon l'une au moins des revendications précédentes, **caractérisé en ce que** la modification de la valeur de commande de freinage ou des valeurs de commande de freinage (P1, P1L, P1R, P2L, P2R) s'effectue par étapes pendant un ou plusieurs freinages, en effectuant cycliquement au moins les étapes a) à d) de la revendication 1.

7. Procédé selon l'une au moins des revendications précédentes, **caractérisé en ce que** le rapport entre la valeur de commande de freinage (P1) réglée au niveau de la deuxième partie de l'unité de véhicule au cours d'un freinage et la valeur de commande de freinage (P2L, P2R) réglée au niveau de la partie de référence est déterminé à titre de facteur de commande de freinage (K) et mémorisé pour une utilisation ultérieure.

8. Procédé selon la revendication 7, **caractérisé en ce que** la valeur initiale (P1START) utilisée au début d'un freinage pour fixer la valeur de commande de freinage (P1) de la deuxième partie de l'unité de véhicule est corrigée avec le facteur de commande de freinage (K).

9. Procédé selon l'une au moins des revendications précédentes, **caractérisé par** les éléments suivants :
a) pendant une circulation non freinée de l'unité de véhicule, on détermine un facteur de correction (S) à partir des vitesses de véhicule partiel (V1, V2),
b) pendant un freinage de l'unité de véhicule, l'une des dérivées temporelles (A1, A2) des vitesses de véhicule partiel (V1, V2) est corrigée avec le facteur de correction (S).
